# EUROPEAN PATENT APPLICATION

(11) **EP 1 764 161 A1**
(43) Date of publication of application: **21.03.2007**
(21) Application number: 06120769.2
(22) Date of filing: 15.09.2006
(51) Int. Cl.: B05D 7/00, B05D 5/06, C09D 5/29

(54) **Method for forming multi-layered coating film and coated product**

(30) Priority: 16.09.2005 JP 2005270635
(71) Applicant: Nippon Paint Co., Ltd., Osaka-shi, Osaka 531-8511 (JP); Mazda Motor Corporation, Aki-gun, Hiroshima 730-8670 (JP)
(72) Inventor: Kakii, Takuhiro Nippon Paint Co., Ltd, Hiroshima Hiroshima 734-0057 (JP); Nishimura, Tsuyoshi Nippon Paint Co., Ltd., Hiroshima Hiroshima 734-0057 (JP); Sasaki, Shigeyuki Nippon Paint Co., Ltd., Hiroshima Hiroshima 734-0057 (JP); Shigenaga, Tsutomu Mazda Motor Corporation, Hiroshima Hiroshima 730-8670 (JP); Yamane, Takakazu Mazda Motor Company, Hiroshima Hiroshima 730-8670 (JP); Kanda, Teruo Mazda Motor Corporation, Hiroshima Hiroshima 730-8670 (JP)
(74) Representative: Perry, Robert Edward

(57) **Abstract**

The invention relates to a method for forming a multi-layered coating film having a bright feel specific to a metallic coating film and a fineness of a luster color pigment with controlling the miscibility between each coating film when final coatings comprising an intermediate coating composition, a base coating composition and a clear coating composition are applied in this order by a wet-on-wet method to form coating films. The method for forming a multi-layered coating film comprises a step of applying an intermediate coating composition, a base coating composition and a clear coating composition in this order on a substrate formed with an electrodeposition coating film, and a step of baking and curing the applied three layers simultaneously, wherein the base coating composition contains crosslinking polymer microparticles and a nonaqueous dispersion resin.

## Description

This application has priority rights of Japanese patent application No.2005-270635, filed September 16, 2005, which is herein incorporated by references.

### FIELD OF THE INVENTION

The present invention relates to a method for forming a coating film by applying an intermediate coating composition, a base coating composition and a clear coating composition in this order in a wet-on-wet manner to a substrate to be coated such as a body of an automobile, and also relates to a coated product having a multi-layered coating film obtained by the coating method.

### BACKGROUND OF THE INVENTION

In the formation of a multi-layered coating film used for a body of an automobile and the like, there are a method in which each constituting coating film is baked and cured every time when it is formed and a method in which plural multi-layered coating films are cured simultaneously, Among these methods, the method in which plural multi-layered coating films are cured simultaneously has the advantage that the baking/drying process can be omitted. For example, a three-coat/one-bake method in which an intermediate coating film, a base coating film and a clear coating film are formed in this order in a wet-on-wet manner is disclosed in the publication of Japanese Patent Application Kokai (JP-A) No. 2001-302964. This invention proposes a method of controlling miscibility and inversion at the boundaries between coating layers by compounding an amide group-containing acryl resin in the intermediate coating composition, to thereby avoid peeling from the electrodeposition coating surface which is caused, particularly, by chipping.

There is also a method proposed in the publication of JP-A No. 2002-153805 in which an intermediate coating composition containing an amide group-containing acryl resin, and an amino resin and a blocked isocyanate as a curing agent is used, which controls miscibility and inversion at boundaries between coating layers and also provides a multi-layered coating film superior in coating properties, especially, chipping properties.

When a multi-layered coating film is formed by the three-coat/one-bake method, a baking drying furnace for an intermediate layer may be omitted, producing a large effect in view of economy and environment. In contrast, however, a reduction of the thermal energy supplied to the intermediate coating film leads to a reduction in the coating properties, causing a serious defect when this is used to form a coating film of a body of an automobile and the like.

in the publication of JP-A No. 2003-211085, a method for forming a multi-layered coating film is disclosed in which an intermediate coating composition contains a urethane-modified polyester resin (a), a melamine resin (b), a blocked isocyanate compound (c), a nonaqueous dispersion resin (d) having a core-shell structure, and a flat pigment (e), and thereby miscibility and inversion at boundaries between the coating layers are controlled and also the occurrence of peeling from the electrode position coating surface caused by chipping and a size of peel area are reduced, and a the coating properties have been further improved. It is generally regarded as an important factor that a coating film imparting a high quality feel to a coated product as its function has a smooth coating film having a mirror-like gloss. In the market, a demand for a higher level of an improvement in the appearance of the coating film for an automobile is increased from year to year. In contrast, the invention does not sufficiently remove a "micro texture" which inhibits such function.

In the publication of JP-A No. 2001-276724, a method for forming a metallic coating film with metallic coating containing non-crosslinking polymer microparticles having an average particle diameter (D₅₀) of 0.05 to 10µm and crosslinking polymer microparticles is disclosed. This coating is invented from the viewpoint of improving the appearance of the vertical plane of a metallic coating film, and particularly developing a fine brightness as a result of studies of controlling a striking the base coating composition into the clear coating composition at a boundary between two coatings. However, this invention does not relate to a method in the three-coat/one-bake system at which the present application aims and in which an intermediate coating/base coating/clear coating are overlapped on each other in an uncured state and these three coating films are cured by one baking operation, and is therefore different from the present invention.

### SUMMARY OF THE INVENTION

It is an object of the present invention to improve the appearance of a coating film and particularly the appearance of the vertical plane of a coated product in the method comprising a step of applying an intermediate coating composition, a base coating composition and a clear coating composition in this order on an electrodeposition coated substrate and a step of baking and curing the above applied three layers simultaneously.

The present invention tried to solve the problem as to an improvement in the appearance of, particularly, the vertical plane of a coated product having insufficient smoothness and a micro texture left in a method for forming a coating film comprising a step of applying an intermediate coating composition, a base coating composition and a clear coating composition in this order on an electrodeposition coated substrate and a step of baking and curing the above applied three layers simultaneously. Then, the inventors of the present invention have made earnest studies and, as a result, have found that the base coating composition can be provided with thixotropy which has not been observed yet by compounding both a nonaqueous dispersion resin (NAD) and a crosslinking polymer microparticles (MG). Thus, a shearing feel caused by thixotropy of the coating film on the vertical plane of the coated product before baking can be greatly reduced in addition to the boundary control effect in the wet-on-wet system, and the micro texture of the appearance of the coating film and a fineness of a luster color pigment can be improved.

Consequently, the present invention provides a method for forming a multi-layered coating film, which comprises a step of successively coating, on an elecrocoating film formed on a substrate, an intermediate coating composition, a base coating composition and a clear coating composition formed thereon, and a step of baking and curing the coated three-layers at the same time, wherein
the intermediate coating composition comprises:
40 to 56% by weight of a urethane-modified polyester resin (a) having a number average molecular weight (Mn) of 1500 to 3000, obtained by reacting an aliphatic diisocyanate compound with a hydroxyl group-containing polyester resin having a glass transition temperature (Tg) of 40 to 80 °C, the polyester being obtained by polycondensation of an acid component containing 80 mol% or more of isophthalic acid with a polyhydric alcohol;
10 to 30% by weight of a melamine resin (b);
15 to 30% by weight of a blocked isocyanate compound (c) obtained by a blocking reaction of a compound having an active methylene group with hexamethylene diisocyanate or an isocyanate compound obtained by reacting hexamethylene diisocyanate with a compound reacted with the hexamethylene diisocyanate, and;
4 to 15% by weight of a nonaqueous dispersion resin (d) having a core-shell structure;
provided that amounts of (a) to (d) are on the bases of a resin solid content; and
0.4 to 2 parts by weight of a flat pigment (e) having a long diameter of 1 to 10µm and a number average particle diameter of 2 to 6µm, which the parts by weight of the flat pigment (e) is based on 100 parts by weight of the resin solid content; and wherein
the base coating composition is a solvent type base coating composition comprising:
10 to 90% by weight of an acryl resin (i) having a number average molecular weight (Mn) of 1000 to 20000, a hydroxyl value of 10 to 200 and an acid value of 1 to 80 mg KOH/g;
5 to 60% by weight of a melamine resin (ii);
1 to 30% by weight of polymer microparticles (iii);
provided that amounts of (i) to (iii) are on the bases of a resin solid content; and
1 to 23.0% of pigment weight concentration (PWC) of a luster color pigment (iv) based on a solid content of the base coating composition, wherein the polymer microparticles (iii) comprise crosslinking polymer microparticles (iii-1) having an average particle diameter (D₅₀) of 0.01 to 1µm and a nonaqueous dispersion resin (iii-2) having an average particle diameter (D₅₀) of 0.05 to 10µm and a core-shell structure, and a ratio of solid contents of both the components (iii-1) and (iii-2) is within a range of 40/60 to 60/40; and wherein
the clear coating composition comprises a carboxyl group-containing acryl resin (A), a carboxyl group-containing polyester resin (B) and an epoxy group-containing acryl resin (C). The above object can be attained by this method.

The present invention also provides a coated product having a multi-layered coating film obtained by the above method for forming a multi-layered coating film.

In the method of the present invention, the multi-layered coating film obtained by applying an intermediate coating composition, a base coating composition and a clear coating composition in this order in a wet-on-wet manner is a coating film having an excellent gloss. Also, a metallic coating film obtained using a base coating composition containing a luster color pigment is superior in, particularly, transparent feel among the appearance evaluation items and can therefore produce such a fine brightness that the luster color pigment is uniformly dispersed. Moreover, a coating film having a metallic feel that is significantly changed corresponding to a viewing angle and is therefore superior in a FF feel can be formed. The present invention ensures that the appearance of the vertical plane of a coated product and particularly, the micro texture can be improved remarkably.

The present invention has the advantages that it is economically superior and is reduced in environmental load because a baking drying furnace for an intermediate composition can be omitted in the three-coat/one-bake system. The present invention thus makes it possible to form a multi-layered coating film in the three-coat/one-bake system without generation of color fluctuation, a reduction in the appearance of the coating film and particularly, a reduction in the appearance of the vertical plane of the coating film or a reduction in the properties of the coating film, which are caused by miscibility between the base coating film and the clean coating film. The method for forming a coating film according to the present invention ensures that a multi-layered coating film superior in the appearance of the coating film can be formed.

### DETAILED DESCRIPTION OF THE PREFERRED

### EMBODIMENTS

In the method for forming a coating film according to the present invention, an intermediate coating composition, a base coating composition and a clear coating composition are used. Each coating composition will be described herein below.

Intermediate coating composition
In the method for forming a coating film according to the present invention, an intermediate coating composition is used to form an intermediate coating film. This intermediate coating composition contains a urethane-modified polyester resin (a), a melamine resin (b), a blocked isocyanate compound (c), a nonaqueous dispersion resin (d) having a core-shell structure, and a flat pigment (e). This intermediate coating composition may further contain various organic or inorganic coloring pigments and extender pigments.

Urethane-modified polyester resin (a)
The urethane-modified polyester resin (a) may be obtained by reacting a hydroxyl group-containing polyester resin with an aliphatic diisocyanate compound.

The polyester resin may be usually produced by polycondensation of an acid component such as a polyvalent carboxylic acid and/or an acid anhydride with a polyhydric alcohol. The hydroxyl group-containing polyester resin used to prepare the urethane-modified polyester resin (a) is produced using an acid component containing 80 mol% or more of an isophthalic acid based on the total mol number of the acid component. When the amount of isophthalic acid in the acid component is less than 80 mol%, the glass transition temperature (Tg) of the obtained hydroxyl group-containing polyester resin may be dropped, which is undesirable for use.

The hydroxyl group-containing polyester resin has a glass transition temperature (Tg) of 40 to 80°C and preferably 45 to 75°C. When the above glass transition temperature (Tg) is less than the lower limit, the hardness of the coating film may be reduced, whereas when the glass transition temperature exceeds the upper limit, a reduction in chipping resistance may be occurred.

Examples of the polyvalent carboxylic acid and/or acid anhydride, other than isophthalic acid, which are used in the preparation of the hydroxyl group-containing polyester resin include, but not particularly limited to, phthalic acid, phthalic acid anhydride, tetrahydrophthalic acid, tetrahydrophthalic acid anhydride, hexahydrophthalic acid, hexahydrophthalic acid anhydride, methyltetrahydrophthalic acid, methyltetrahydrophthalic acid anhydride, hymic acid anhydride, trimellitic acid, trimellitic acid anhydride, pyromellitic acid, pyromellitic acid anhydride, terephthalic acid, maleic acid, maleic acid anhydride, fumaric acid, itaconic acid, adipic acid, azelaic acid, sebacic acid, succinic acid, succinic acid anhydride, dodecenylsuccinic acid and dodecenylsuccinic acid anhydride.

Examples of the polyhydric alcohol used to prepare the hydroxyl group-containing polyester resin include, but not particularly limited to, ethylene glycol, diethylene glycol, polyethylene glycol, propylene glycol, dipropylene glycol, polypropylene glycol, neopentyl glycol, 1,2-butanediol, 1,3-butandiol, 1,4-butanediol, 2,3-butanediol, 1,5-pentanediol, 1,6-hexanediol, 1,4-cyclohexanediol, 2,2-dimethyl-3-hydroxypropyl-2,2-dimethyl-3-hydroxypropionate, 2,2,4-trimethyl-1,3-pentanediol, polytetramethylene ether glycol, polycaprolactonepolyol, glycerin, sorbitol, annitol, trimethylolethane, trimethylolpropane, trimethylolbutane, hexanetriol, pentaerythritol and dipentaerythritol.

In addition to the above polyvalent carboxylic acid and/or acid anhydride and the polyhydric alcohol component, other reactive components may be used in the preparation of the hydroxyl group-containing polyester resin. Examples of the above other reactive components include monocarboxylic acids, hydroxycarboxylic acids and lactones. Also, drying oil, semi-drying oil and fatty acids of these oils may be used. Specific examples of these compounds include monoepoxide compounds such as Carjula E (manufactured by Shell Chemicals Japan Ltd.) and lactones. The above lactones are those that can be ring-opened and added to polyesters of polyvalent carboxylic acids and polyhydric alcohols to form a graft chain. Examples of the lactones include β-propiolactone, dimethylpropiolactone, butyllactone, γ-valerolactone, ε-caprolactone, γ-caprolactone, γ-caprylolactone, crotolactone, δ-valerolactone and δ-caprolactone. Among these compounds, ε-caprolactone is most preferable.

The hydroxyl group-containing polyester resin obtained in the above manner and an aliphatic diisocyanate compound are reacted with each other to prepare the urethane-modified polyester resin (a). Specific examples of the aliphatic diisocyanate compound may include hexamethylene diisocyanate, trimethylhexamethylene diisocyanate, cyclohexane-1,4-diisocyanate, dicyclohexylmethane-4,4-diisocyanate and methylcyclohexanediisocyanate. Among these compounds, hexamethylene diisocyanate and trimethylhexamethylene diisocyanate, and buret isomers, nurate isomers and adduct isomers of the diisocyanate are preferably used from the viewpoint of chipping resistance and weather resistance.

In the preparation of the urethane-modified polyester resin (a), it is preferable to react 5 to 15 parts by weight of the aliphatic diisocyanate compound based on 100 parts by weight of the hydroxyl group-containing polyester resin. The number average molecular weight of the urethane-modified polyester resin (a) is preferably 1500 to 3000 and more preferably 1200 to 2500. When the number average molecular weight is less than the lower limit, unsatisfactory coating workability and curability may be obtained. When the number average molecular weight exceeds the upper limit, on the other hand, the content of non-volatile components may be too low in the coating operation and the operability may be rather impaired. As used herein, the number average molecular weight is determined by the GPC method using a styrene polymer as its standard.

The urethane-modified polyester resin (a) preferably has a hydroxyl value (solid content) of 30 to 180 and more preferably 40 to 160. When the hydroxyl value exceeds the upper limit, the water resistance of the coating film may deteriorate. When the hydroxyl value is less than the lower limit, the curability of the coating composition may be deteriorate. Also, the acid value of the urethane-modified polyester resin (a) is preferably 3 to 30 mg KOH/g (solid content) and more preferably 5 to 25 mg KOH/g. When the acid value exceeds the upper limit, the water resistance of the coating film may deteriorate. When the acid value is less than the lower limit, the curability of the coating composition may deteriorate.

The content of the above urethane-modified polyester resin (a) in the intermediate coating composition in the present invention is 40 to 56% by weight based on the weight of the resin solid content. When the content of the urethane-modified polyester resin (a) is less than 40% by weight, the chipping resistance of the coating film may be lowered. Also, when the content exceeds 56% by weight, the hardness of the coating film may be reduced. The content of urethane-modified polyester resin (a) is preferably 43 to 50% by weight.

Melamine resin (b)
The melamine resin (b) is not particularly limited. A methylated melamine resin, butylated melamine resin or methyl/butyl mixed type melamine resin may be used as the melamine resin (b). Examples of the melamine resin include "Cymel 303" and "Cymel 254" available commercially from Nihon Cytec Industries Inc., "U-VAN 128" and "U-VAN 20N60" available commercially from Mitsui Chemicals Inc., and "SURMIMAL series" available commercially from Sumitomo Chemical Co., Ltd.

The melamine resin (b) is contained within 10 to 30% by weight based on the weight of the resin solid content. When the content is less than the lower limit, insufficient curability of the coating composition may be obtained. When the content exceeds the upper limit, the cured film may be excessively hardened and be hence fragile. The content of the melamine resin (b) is preferably 15 to 25% by weight.

Blocked isocyanate compound (c)
Examples of the above blocked isocyanate compound (c) include those obtained by adding a compound having an active methylene group to hexamethylene diisocyanate or an isocyanate compound, for example, a polymer such as a nurate isomer thereof, obtained by reacting hexamethylene diisocyanate with a compound which can be reacted with hexamethylene diisocyanate. When the blocked isocyanate compound (c) is heated, the block agent is dissociated to generate an isocyanate group and then the isocyanate group is reacted with a functional group in the above urethane-modified polyester resin to cure the resin. Examples of the above compound having an active methylene group include active methylene compounds such as acetylacetone, ethyl acetoacetate and ethyl malonate.

The content of the above blocked isocyanate compound is 15 to 30% by weight and more preferably 17 to 25% by weight based on the weight of the resin solid content. When the content is out of the above range, insufficient curing may be obtained. Examples of the blocked isocyanate compound include a methylene type blocked isocyanate (trade name: "Duranate MF-K60X, manufactured by Asahi Kasei Corporation).

Nonaqueous dispersion resin (d)
The nonaqueous dispersion resin (d) having a core-shell structure may be prepared as resin particles insoluble in a mixed solution of a dispersion stable resin and an organic solvent by copolymerizing polymerizable monomers in the mixed solution. As used herein, the term "nonaqueous dispersion" means a nonaqueous dispersion type resin and one obtained by dispersing and stabilizing a resin in an organic solvent as a medium.

The resin particles in the nonaqueous dispersion resin (d) are preferably prepared as non-crosslinking resin particles. Also, the monomer to be copolymerized in the presence of a dispersion stabilizing resin to obtain the non-crosslinking resin particles is not particularly limited as long as it is a radically polymerizable unsaturated monomer.

in the synthesis of the above dispersion stabilizing resin and the nonaqueous dispersion resin (d), it is preferable to use a polymerizable monomer having a functional group. This is because the nonaqueous dispersion resin (d) having a functional group can react with a curing agent described below together with the dispersion stabilizing resin made to contain a functional group to form a three-dimensionally crosslinked coating film,

The dispersion stabilizing resin is not particularly limited as long as it can synthesize the nonaqueous dispersion resin (d) stably in an organic solvent. As the dispersion stabilizing resin, specifically, it is preferable to use an acryl resin, polyester resin, polyether resin, polycarbonate resin, polyurethane resin or the like having a hydroxyl value (solid content) of 10 to 250 and preferably 20 to 180, an acid value (solid content) of 0 to 100 mg KOH/g and preferably 0 to 50 mg KOH/g and a number average molecular weight of 800 to 100000 and preferably 1000 to 20000. When each property exceeding each of the upper limits, handling characteristics of the resin may be reduced and handling characteristics of the nonaqueous dispersion itself may be reduced. When each property less than each of the lower limits, detachment of the resin and reduced stability of particles in the coating film formed of the resin may be obtained.

Preferable examples of a method of synthesizing the dispersion stabilizing resin include, but not particularly limited to, a method in which the dispersion stabilizing resin is obtained by radical polymerization in the presence of a radical polymerization initiator and a method in which the dispersion stabilizing resin is obtained by a condensation reaction or an addition reaction. A proper monomer may be selected as the monomer used to obtain the above dispersion stabilizing resin corresponding to the properties of the resin. It is however preferable to use monomers having a functional group such as a hydroxyl group and an acid group contained in the polymerizable monomer used to synthesize a nonaqueous dispersion described below. Monomers further having functional groups such as a glycidyl group and an isocyanate group may be used, if needed.

The nonaqueous dispersion resin (d) can be obtained by polymerizing a polymerizable monomer in the presence of the dispersion stabilizing resin. As the polymerizable monomer, a radically polymerizable monomer may be used.

As the polymerizable monomer used to synthesize the nonaqueous dispersion resin (d), those having a functional group are preferably used. Typical examples of the polymerizable monomer having a functional group are given below. Examples of the polymerizable monomer having a hydroxyl group include hydroxyethyl (meth)acrylate, hydroxypropyl (meth)acrylate, hydroxybutyl (meth)acrylate, hydroxymethylmethacrylate, allyl alcohol and an adduct of hydroxyethyl (meth)acrylate and ε-caprolactone.

On the other hand, examples of the polymerizable monomer having an acid group include polymerizable monomers having a carboxyl group, sulfonic acid group or the like. Examples of the polymerizable monomer having a carboxyl group include a (meth)acrylic acid, crotonic acid, ethaacrylic acid, propylacrylic acid, isopropylacrylic acid, itaconic acid, maleic acid anhydride and fumaric acid. Examples of the polymerizable monomer having a sulfonic acid group include t-butylacrylamidosulfonic acid. When the polymerizable monomer having an acid group is used, a part of the acid group is preferably a carboxyl group.

Examples of the polymerizable monomer having a functional group include, other than the above compounds, glycidyl group-containing unsaturated monomers such as glycidyl (meth)acrylate and isocyanate group-containing unsaturated monomers such as m-isopropenyl-α,α-dimethylbenzylisocyanate and isocyanateethylacrylate.

Examples of other polymerizable monomers include alkyl (meth)acrylate esters such as methyl (meth)acrylate, ethyl (meth)acrylate, isopropyl (meth)acrylate, n-propyl (meth)acrylate, n-butyl (meth)acrylate, t-butyl (meth)acrylate, isobutyl (meth)acrylate, 2-ethylhexyl (meth)acrylate, n-octyl (meth)acrylate, lauryl (meth)acrylate, stearyl (meth)acrylate and tridecyl (meth)acrylate, addition reaction products between fatty acids and acrylate or methacrylate monomers having an oxirane structure (for example, an addition reaction product of stearic acid and glycidylmethacrylate), addition reaction products of an oxirane compound having an alkyl group having 3 or more carbon atoms and an acrylic acid or methacrylic acid, polymerizable monomers such as styrene, α-methylstyrene, o-methylstyrene, m-methylstyrene, p-methylstyrene, p-t-butyl styrene, benzyl (meth)acrylate, itaconatic acid ester (for example, dimethyl itaconate), maleic acid ester (for example, dimethyl maleate) and fumaric acid ester (for example, dimethyl fumarate), and other than the above, acrylonitrile, methacrylonitrile, methyl isopropenyl ketone, vinyl acetate, Beobe monomer (manufactured by Shell Chemicals Japan Ltd.), vinyl propionate, vinyl pivalate, ethylene, propylene, butadiene, N,N-dimethyl aminoethyl acrylate, N,N-dimethyl aminoethyl methacrylate, acrylamide and vinylpyridine.

In the preparation of the nonaqueous dispersion resin (d), the structural ratio of the dispersion stabilizing resin to the polymerizable monomer may be optionally selected corresponding to the purpose. For example, the ratio of the dispersion stabilizing resin is preferably 3 to 80% by weight and particularly preferably 5 to 60% by weight and the ratio of the polymerizable monomer is preferably 97 to 20% by weight and particularly preferably 95 to 40% by weight based on the total weight of both the components. A total concentration of the dispersion stabilizing resin and the polymerizable monomer in an organic solvent is preferably 30 to 80% by weight and particularly preferably 40 to 60% by weight based on the total weight.

The polymerization reaction to obtain the above nonaqueous dispersion is preferably performed in the presence of a radical polymerization initiator. Examples of the radical polymerization initiator include azo type initiators such as 2,2'-azobisisobutyronitrile and 2,2'-azobis(2,4-dimethylvaleronitrile), and benzoyl peroxide, lauryl peroxide and t-butyl peroctoate. The amount of these initiators used is preferably 0.2 to 10 parts by weight and more preferably 0.5 to 5 parts by weight based on 100 parts by weight of all polymerizable monomers. The polymerization reaction to obtain the nonaqueous dispersion in the organic solvent containing the dispersion stabilizing resin is performed at a temperature range of about 60 to 160°C for about 1 to 15 hours.

The nonaqueous dispersion resin (d) obtained in this manner has a hydroxyl value (solid content) of 50 to 400 and preferably 100 to 300, an acid value (solid content) of 0 to 200 mg/KOH/g and preferably 0 to 50 mg KOH/g and an average particle diameter (D₅₀) of 0.05 to 10µm and preferably 0.1 to 2µm. When the value is less than each of the lower limits, the shape of particles maynot be maintained. When a value exceeds each of the upper limits, the stability of the resin may deteriorate when it is dispersed in the coating composition.

The above nonaqueous dispersion has the characteristics that though it is a particle component in the coating composition but does not form a particle structure in the coating film unlike in the case of the crosslinking polymer microparticles. Namely, the nonaqueous dispersion is different from the crosslinking polymer particles in the point that it is changed in the shape of particles in the baking step, enabling the formation of a resin component because no crosslinking part is present in the particle.

The resin particles called NAD (Non Aqueous Dispersion, nonaqueous type polymer dispersion solution) described in, for example, Colorant, vol. 48 (1975), pp28-34 may also be used.

The content of the nonaqueous dispersion resin (d) in the coating composition according to the present invention is 4 to 15% by weight based on the weight of the resin solid content. When the content is less than the lower limit, insufficient appearance of the overall coating film may be obtained. When the content exceeds the upper limit, deterioration in chipping properties may be obtained. This content is preferably 5 to 12% by weight.

Flat pigment (e)
The flat pigment (e) is a pigment in which at least one plane has a flat shape. Examples of the flat pigment (e) may include mica, alumina, talc and silica. Among these materials, talc is preferably used. This is because the chipping properties of the coating film can be improved.

The above flat pigment preferably has a long diameter of 1 to 10µm and a number average particle diameter of 2 to 6µm. As used herein, the long diameter is a diameter on the flat plane of the flat pigment. Also, the number average particle diameter means an average particle diameter obtained by selecting a specified number of particles from a scanning electron microscope image to make image analysis, thereby evaluating an average of circle equivalent diameters and the distribution of these diameters. Here, the circle equivalent diameter means a diameter of a provisional sphericity equal to the area of the pigment. These diameter and number average particle diameter may be measured by using a scanning electron microscope. When the long diameterof the flat pigment is out of the above range, the appearance of the coating film may be deteriorates and it may be difficult to develop sufficient anti-chipping properties. Also, when the number average particle diameter is out of the above range, the appearance of the coating film may deteriorate and it may be difficult to develop sufficient anti-chipping properties.

The content of the above flat pigment (e) is 0.4 to 2 parts by weight based on 100 parts of the resin solid content in the coating composition. This content is more preferably 0.5 to 1.5 parts by weight. When the content is out of the above range, a reduction in adhesion to the undercoat may be occurred and sufficient chipping properties may not be obtained.

The intermediate coating composition may further contain other components in addition to the above components (a) to (e). Examples of the above other components include resin components. Examples of the resin components which may be used include, though not limited to, an acryl resin, polyester resin, alkyd resin and epoxy resin. These resins may be used either alone or in combination of two or more.

As the other component, color pigments and the like may be used. Examples of the color pigment include organic type azo chelate type pigments, insoluble azo type pigments, condensed azo type pigments, diketopyrrolopyrrole type pigments, benzimidazolone type pigments, phthalocyanine type pigments, indigo pigments, perinone type pigments, perylene type pigments, dioxane type pigments, quinacridone type pigments, isoindolinone type pigments and metal complex pigments. Examples of the inorganic type include chrome yellow, yellow iron oxide, red iron oxide, carbon black and titanium dioxide. Moreover, as the extender pigments, calcium carbonate, barium sulfate, aluminum powders, kaolin and the like may be used.

Generally, a gray type coating composition containing carbon black and titanium dioxide as major pigments is used in the intermediate coating composition. In addition, a intermediate coating composition containing pigments that well matches with the hue of an upper coating film and a combination of various color pigments may be used.

A viscosity control agent may be further added to the intermediate coating composition. This enables the coating composition to be prevented from being miscible with an upper coating film and to ensure coating operability. As the viscosity control agent, a compound exhibiting thixotropic property may be compounded. Examples of the viscosity control agent may include polyamide type such as a swollen dispersion of fatty acid amide, amide type fatty acid and long-chain polyaminoamide phosphate salts, polyethylene type such as a colloid-like swollen dispersion of polyethylene oxide, organic acid smectite clay, organic bentonite type such as montmorillonite, inorganic pigments such as aluminum silicate and barium sulfate, flat pigments developing viscous nature according to their shapes and crosslinking resin particles.

A total solid content of the intermediate coating composition used in the present invention during coating is 30 to 80% by weight and preferably 35 to 65% by weight. When the content is out of this range, deterioration in coating stability may be occurred. Also, when the content exceeds the upper limit, the viscosity may be too high, leading to deteriorated appearance of the coating film whereas when the content is less than the lower limit, the viscosity may be too low, and appearance inferiors such as miscibility and mottling may be occurred. Besides the above components, additives which are to be usually added to coatings, for example, a surface regulator, antioxidant and deformer agent may be compounded in the intermediate coating composition used in the present invention. The amounts of these additives compounded are known to skilled persons.

As a method of producing the coating composition used in the present invention, all the methods, including those described below, which are known to skilled persons such as a method in which ingredients including pigments are kneaded and dispersed using a kneader or roll or SG mill may be used, and are not particularly limited.

Base coating composition
The base coating composition used in the method for forming a coating film according to the present invention is a metallic base coating composition containing an acryl resin (i), a melamine resin (ii), polymer microparticles (iii), a luster color pigment (iv), and optional coating film-forming resin, curing agent and the like. The polymer microparticles (iii) contain crosslinking polymer microparticles (iii-1) and a nonaqueous dispersion resin (iii-2) having a core-shell structure.

The base coating composition of the present invention contains the acryl resin (i). When the acryl resin (i) is contained, the properties, for example, weather resistance of the base coating film can be improved. The above acryl resin has a hydroxyl value (solid content) of 10 to 200. When the hydroxyl value is less than 10, the coating film may be insufficiently cured and therefore the properties of the coating film may be deteriorate. When the hydroxyl value exceeds 200, the flexibility or water resistance of the coating film may deteriorate.

The acryl resin (i) in the present invention is prepared using one or two or more unsaturated monomers such as an acrylic acid, methacrylic acid and/or their derivatives, which are usually used to obtain acryl resins. As the monomer component used to prepare the acryl resin (i), a hydroxyl group-containing monomer may also be used.

Examples of the above derivatives of acrylic acids or methacrylic acids include, but not particularly limited to, alkyl esters such as methyl (meth)acrylate, ethyl (meth)acrylate, propyl (meth)acrylate, n-,i- or t-butyl (meth)acrylate, 2-ethylhexyl (meth)acrylate, lauryl (meth)acrylate and glycidyl (meth)acrylate; hydroxyalkyl esters such as 2-hydroxyethyl (meth)acrylate, hydroxypropyl (meth)acrylate and 4-hydroxybutyl (meth)acrylate; amides such as (meth)acrylamide; and nitriles such as (meth)acrylonitrile. As the above monomer component, styrenes such as styrene and α-methylstyrene; and vinyl compounds such as vinyl acetate may be included. Examples of the hydroxyl group-containing monomer include hydroxyl group-containing unsaturated monomers such as hydroxyethyl (meth)acrylate.

The above acryl resin (i) has a number average molecular weight of 1000 to 20000. When the number average molecular weight is less than 1000, deterioration in the film properties, such as weather resistance, of the coating film may be occurred. When the number average molecular weight exceeds 20000, on the other hand, the viscosity of the resin may be increased, requiring a large amount of a solvent. As used herein, the number average molecular weight is measured by gel permeation chromatography (GPC) and is a number average molecular weight based on polystyrene.

The above acryl resin (i) is preferably an acid value of 1 to 80 mg KOH/g (solid content). When the acid value is less than 1 mg KOH/g, the properties of the coating film may deteriorate. When the acid value exceeds 80 mg KOH/g, the water resistance of the coating film may deteriorate easily. The acid value is more preferably 10 to 45 mg KOH/g.

The method of producing the above acryl resin (i) is not particularly limited and may be produced by, for example, a solution polymerization such as usual radical polymerization.

The content of the acryl resin (i) in the base coating composition is preferably 10 to 90% by weight based on the solid content of the coating film-forming resins such as the acryl resin (A), melamine resin (ii) and polymer microparticles (iii) in the base coating composition. When the content of the acryl resin (i) is less than 10% by weight, the film properties such as weather resistance of the coating film may deteriorate. When the content exceeds 90% by weight, the coating film may be hard and fragile, and the film properties such as chipping properties therefore may deteriorate.

The melamine resin (ii) contained in the base coating composition in the present invention is not particularly limited and may be the same as or different from the melamine resin (b) contained in the intermediate coating composition. As the melamine resin (ii), for example, a methylated melamine resin, butylated melamine resin, methyl/butyl mixed type melamine resin or the like may be used. Examples of commercially available melamine resins include "Cymel-303" and "Cymel-254" manufactured by Nihon Cytec Industries Inc., "U-VAN 20N60" and "U-VAN 128" manufactured by Mitsui Chemicals Inc. and "SUMIMAR series" manufactured by Sumitomo Chemical Co., Ltd.

The content of the melamine resin (ii) in the base coating composition is preferably 5 to 60 % by weight and more preferably 15 to 45% by weight based on the solid content of the coating film-forming resins such as the acryl resin (i), melamine resin (ii) and polymer microparticles (iii). When the amount of the melamine resin to be used is less than the lower limit, insufficient curability may be obtained, whereas when the content exceeds the upper limit, the cured film may be too hard and the chipping properties of the coating film formed of the resin may deteriorate.

The polymer microparticles (iii) contained in the base coating composition in the present invention contain crosslinking polymer microparticles (iii-1) and nonaqueous dispersion resin (iii-2). The content of the polymer microparticles (iii) in the base coating composition is preferably 1 to 30 parts by weight based on the solid content of the coating film-forming resins such as the acryl resin (i), melamine resin (ii) and polymer microparticles (iii) contained in the base coating composition.

As the nonaqueous dispersion resin (iii-2), the same as the nonaqueous dispersion resin in the intermediate coating composition may be used. Moreover, the resin particles called NAD (Non Aqueous Dispersion, nonaqueous type polymer dispersion solution) described in Colorant, vol. 48 (1975), pp686-692 may also be used in the same manner as in the case of the intermediate coating composition. As the nonaqueous dispersion resin (iii-2) to be used for the base coating composition, a nonaqueous dispersion resin having an average particle diameter (D₅₀) of 0.05 to 10µm among the aforementioned nonaqueous dispersion resins and the like is used.

As used herein, the term "average particle diameter" in this specification is usually used to show the grain size (whether the particle diameter is large or small) of particles, and a median diameter corresponding to that of 50% by weight of all particles, arithmetic mean diameter, surface area mean diameter or volumetric area mean diameter is used. The average particle diameter shown in this specification is a value measured by a laser method. The laser method is a method in which particles are dispersed in a solvent, and the dispersed solvent is irradiated with laser beams to receive the scattered light, followed by calculation to measure an average particle diameter, grain distribution and the like.

As the crosslinking polymer microparticles (iii-1) in the base coating composition in the present invention, those which are insoluble in an organic solvent and have an average particle diameter (D₅₀) of 0.01 to 1µm are used. When the average particle diameter of the microparticles exceeds the upper limit, the stability of the particles may be reduced. When the average particle diameter is less than the lower limit, this offers a difficulty in production equipment and it may be difficult to keep the shape of the particles. The crosslinking polymer microparticles may be prepared by emulsion-polymerizing polymerizable monomers in an aqueous medium in the presence of a resin having emulsifying ability and an initiator. Examples of the resin having emulsifying ability include resins such as alkyd resins or polyester resins synthesized using, as one of a polyvalent alcohol component, a monomer having an amphoteric ion group and two or more hydroxyl groups in its molecule.

Examples of the above amphoteric group include -N⁺-R-COO⁻ or -N⁺-R-SO₃⁻ (in the formula, R represents a C₁-C₆ liner or branched alkylene group). A resin having emulsifying ability can be properly prepared by using a monomer having the amphoteric group and two or more hydroxyl groups. As an example of the monomer, a hydroxyl group-containing aminosulfonic acid type amphoteric compound is preferably used in view of the synthesis of the resin. Specific examples of the monomer include bishydroxyethyltaurine.

The resin which is synthesized using the above monomer, contains an amphoteric group in its molecule and has emulsifying ability is preferably a polyester resin having an acid value of 30 to 150 mg KOH/g, more preferably 40 to 150 mg KOH/g, and a number average molecular weight of 500 to 5000, more preferably 700 to 3000. When each of these acid values and number average molecular weight exceeds the upper limit, the handling characteristics of the resin may deteriorate. Also, when each of these acid values and number average molecular weight is less than the lower limit, the resin having emulsifying ability may be desorbed and the solvent resistance of the coating film may be decreased in case that the resin is used to form a coating film,.

As the polymerizable monomer which is used in the synthesis of the crosslinking polymer microparticles and is emulsion-polymerized, a monomer having two or more radically polymerizable ethylenic unsaturated groups in its molecule is used. The monomer having two or more radically polymerizable ethylenic unsaturated groups in its molecule is preferably contained in an amount range from 0.1 to 70% by weight. The amount is selected to the extent that the microparticle polymer is crosslinked at a level enough to prevent the microparticle polymer from being dissolved in a solvent is obtained.

Examples of the monomer containing two or more radically polymerizable ethylenic unsaturated groups include ethylene glycol di (meth)acrylate, diethylene glycol di (meth)acrylate, trimethylolpropanedi (meth)acrylate, trimethylolpropane tri (meth)acrylate and glycerin di(meth)acrylate.

The crosslinking polymer microparticles (iii-1) used in the present invention do not contain a low-molecular weight emulsifier or a protective colloid which deteriorate the properties in forming the coating film, and are crosslinked by copolymerizing the monomer having two or more radically polymerizable ethylenic unsaturated group in its molecule. Therefore, the crosslinking polymer microparticles (iii-1) have the advantage that it can improve the water resistance, solvent resistance and gloss of the obtained coating film.

The mixture ratio by weight of a solid of the crosslinking polymer microparticles (iii-1) to nonaqueous dispersion resin (iii-2) having a core-shell structure in the base coating composition is within a range from 40/60 to 60/40. When the ratio is out of the above range, insufficient viscosity control effect may be imparted to the base coating composition. Specifically, larger structural viscosity can be obtained by using the crosslinking polymer microparticles (iii-1) and the nonaqueous dispersion resin (iii-2) having a core-shell structure together in a ratio within the above range.

The luster color pigment (iv) contained in the base coating composition is not particularly limited in any shape and may be colored, As the luster color pigment (iv), a scaly pigment having an average particle diameter (D₅₀) of 2 to 50µm and a thickness of 0.1 to 5µm is preferable used. Also, pigments having an average particle diameter of 10 to 35µm have the advantage that they are superior in luster color feeling and are therefore used more preferably. The pigment weight concentration (PWC) of the above luster color pigment in the base coating composition is generally 23.0% or less. When the pigment weight concentration exceeds the upper limit, the appearance of the coating film may deteriorate. The pigment weight concentration is preferably 1% to 20.0% and more preferably 1 % to 18.0%. This pigment concentration indicates the content of the pigment based on the weight of the solid content of the base coating composition.

Examples of the above luster color pigment may include rton-colored or colored metallic luster color materials and the mixture thereof such as metals and alloys, interference mica powder, color mica powder, white mice powder, graphite or non-colored or colored flat pigments. Non-colored or colored metallic luster color materials and the mixture thereof such as metals, alloys are preferable, Specific examples of the metals may include aluminum, aluminum oxide, copper, zinc, iron, nickel and tin. These metals have high dispersibility. Also, the use of these metals makes it possible to form a highly transparent coating film.

The base coating composition used in the present invention may further contain color pigments and/or extender pigments. Examples of the color pigments include organic azo chelate pigments, insoluble azo pigments, condensed azo pigments, phthalocyanine pigments, indigo pigments, perinone pigments, perylene pigments, dioxane pigments, quinacridone pigments, isoindolinone pigments and metal complex pigments. Examples of an inorganic pigment include chrome yellow, yellow iron oxide, red iron oxide, carbon black and titanium dioxide. Also, calcium carbide, barium sulfate, clay, talc and the like may be used together as the extender pigment.

The total pigment weight concentration (PWC) including the above luster color pigment and all other pigments in the base coating composition is 1 to 50%, preferably 1 % to 40% and more preferably 1% to 30%. When the concentration exceeds the upper limit, the appearance of the coating film may be deteriorate.

Examples of the coating film-forming resin contained in the above base coating composition include, but not particularly limited to, coating film-forming resins such as acryl resins, polyester resins, alkyd resins, epoxy resins and urethane resins. These resins are used in combination with a curing agent such as an amino resin and/or a blocked isocyanate resin. Combinations of an acryl resin and/or a polyester resin and a melamine resin are preferable from the viewpoint of pigment dispersion or operability.

The amount of the solids of the base coating composition used in the present invention during coating is 15 to 70% by weight and preferably 20 to 50% by weight. When the amount exceeds the upper limit, the viscosity may be too high with the result that the appearance of the coating film may deteriorate. When the amount is less than the lower limit, the viscosity is too low, deteriorated appearance such as miscibility and mottling may be obtained. In addition, when the amount is out of the above range, the coating stability tends to deteriorate.

As the base coating composition, a solvent type is usually used. Any of the organic solvent type and nonaqueous dispersion type may be used insofar as it is a solvent type.

As a method of producing the base coating composition used in the present invention, all the methods, including those described below, that are known to skilled persons such as a method in which ingredients including pigments are kneaded and dispersed using a kneader or roll may be used.

Clear coating composition
The clear coating composition used to form the clear coating film in the method for forming a coating film in the present invention comprises a carboxyl group-containing acryl resin (A), a carboxyl group-containing polyester resin (B) and an epoxy group-containing acryl resin (C). This clear coating composition, when heated, forms an ester bond by a reaction of a carboxyl group with an epoxy group to crosslink.

Examples of the carboxyl group-containing acryl resin (A) contained in the above clear coating composition include acryl resins having two or more carboxyl groups in their molecules, an acid value of 5 to 300 mg KOH/g (solid content) and a number average molecular weight (Mn) of 500 to 8000.

As the above carboxyl group-containing acryl resin, it is more preferable to use a carboxyl group-containing acryl resin obtained by reacting (1) an acryl type polyacid anhydride with (2) a mono-alcohol, wherein carboxyl group and carbonate group in tye acryl resin are bound with carbons adjacent to each other.

The above acryl type polyacid anhydride (1) may be obtained by copolymerizing 15 to 40% by weight and preferably 15 to 35% by weight of an acid anhydride group-containing ethylenic unsaturated monomer with 60 to 85% by weight and preferably 65 to 85% by weight of an ethylenic unsaturated monomer having no acid anhydride group. When the amount of the acid anhydride group-containing ethylenic unsaturated monomer is less than the lower limit, insufficient curability may be obtained. When the amount of the acid anhydride group-containing ethylenic unsaturated monomer exceeds the upper limit, the coating film may be too hard and fragile, leading to unsatisfactory weather resistance.

The above acid anhydride group-containing ethylenic unsaturated monomer includes, for example, itaconic acid anhydride, maleic acid anhydride and citraconic acid anhydride.

Also, any ethylenic unsaturated monomer may be used as the ethylenic unsaturated monomer having no acid anhydride group , and is not particularly limited as long as it is an ethylenic unsaturated monomer that does not adversely affect the acid anhydride group. It is however preferable to use a monomer having one ethylenic unsaturated bond and 3 to 15 and particularly 3 to 12 carbon atoms. The ethylenic unsaturated monomers having no acid anhydride are preferably used in combinations of two or more to improve the compatibility among resins.

Examples of the ethylenic unsaturated monomer having no acid anhydride group include styrene, α-methylstyrene, p-t-butylstyrene, various (meth)acrylates, and glycidyl versatate such as VeoVa-9 and VeoVa-10 manufactured by Shell Chemicals Japan Ltd. When styrene or a styrene derivative is used, it is preferably used in an amount of 5 to 40% by weight based on all monomers.

As the ethylenic unsaturated monomer having no acid anhydride group, monomers having a carboxyl group such as an acrylic acid, methacrylic acid, itaconic acid and maleic acid, and adducts of ethylenic unsaturated monomers having a hydroxyl group and acid anhydride group-containing compounds may be used. Among these compounds, it is particularly preferable to use a long-chain carboxyl group-containing monomer having a spacer part corresponding to about 5 to 20 carbon atoms between the ethylenic unsaturated group and the carboxyl group because this monomer improves the scratching characteristics of the coating film.

The number average molecular weight of the acryl type polyacid anhydride (1) obtained by copolymerizing the above acid anhydride-containing ethylenic unsaturated monomer with the ethylenic unsaturated monomer having no acid anhydride group is 500 to 8000, preferably 800 to 6000 and particularly preferably 1500 to 4000. When the number average molecular weight exceeds the upper limit, the compatibility among resins may be reduced, so that the qualities of the appearance of the coating film may deteriorate. When the number average molecular weight is less than the lower limit, insufficient curability may be obtained. Also, the obtained polymer has at least two or preferably 2 to 15 acid anhydride groups in its molecule. When the number of the acid anhydride groups is less than the lower limit, insufficient curability may be obtained. When the number of the acid anhydride groups exceeds the upper limit, unsatisfactory weather resistance may be obtained because the coating film may be too hard and fragile.

As the above mono-alcohol (2), those having 1 to 12 carbon atoms and particularly 1 to 8 carbon atoms are preferably used. This is because when it is reacted with the foregoing acryl type polyacid anhydride, alcohols are easily vaporized, which are preferable to regenerate an acid anhydride group. Examples of the mono-alcohol (2) include methanol, ethanol, n-propanol, i-propanol, n-butanol, i-butanol, t-butanol, n-hexyl alcohol, lauryl alcohol, methyl cellosolve, ethyl cellosolve, methoxy propanol, ethoxy propanol, furfuryl alcohol, dimethyl amino ethanol, diethyl amino ethanol, acetol, allyl alcohol and propargyl alcohol.

When the above acryl type polyacid anhydride (1) is reacted with the mono-alcohol (2) to synthesize the carboxyl group-containing acryl resin (A), these components are used such that the molar ratio of an acid anhydride group and a hydroxyl group is 1/10 to 1/1, preferably 1/5 to 1/1 and more preferably 1/2 to 1/1. When the molar ratio is less than the lower limit, that excess alcohol may be a cause of popping when the coating film is cured. When the molar ratio exceeds the upper limit, unreacted acid anhydride groups left unremoved may cause a deterioration in storage stability.

The carboxyl group-containing acryl resin (A) containing a carboxyl group and a carboxylate which is obtained in the above reaction has an acid value of preferably 5 to 300 mg KOH/g and particularly preferably 50 to 250 mg KOH/g. When the acid value is less than the lower limit, insufficient curability may be obtained. When the acid value exceeds the upper limit, inferior storage stability may be obtained.

The above carboxyl group-containing acryl resin (A) is used in an amount of 10 to 70% by weight, preferably 15 to 50% by weight and more preferably 20 to 45% by weight based on all nonvolatile components in the resin composition. When the amount to be compounded is less than the lower limit, the weather resistance of the coating film may deteriorate. When the amount exceeds the upper limit, the coating film may become too hard.

Examples of the carboxyl group-containing polyester resin (B) contained in the above clear coating composition include those which are obtained by reacting (1) a polyester polyol having three or more hydroxyl groups with (2) an acid anhydride. The carboxyl group-containing polyester resin (B) may have an acid value of 50 to 350 mg KOH/g (solid content), a number average molecular weight of 400 to 3500 and the ratio of the weight average molecular weight/the number average molecular weight is 1.8 or less.

The above carboxyl group-containing polyester resin (B) may be obtained by a half-esterification reaction between the polyester polyol (1) having three or more hydroxyl groups with the acid anhydride (2). In this case, the polyester polyol means a polyhydric alcohol which has two or more ester bond chains, and reacts with an acid anhydride to generate two or more acid functional groups and has the following characteristics.

The polyester polyol (1) may be synthesized by using a low-molecular weight polyhydric alcohol having at least three hydroxyl groups and 3 to 16 carbon atoms or by adding a lactone compound such as ε-caprolactone to this low-molecular weight polyhydric alcohol to extend the chain. By introducing a linear aliphatic group into the low-molecular weight polyhydric alcohol, the coating film is provided with flexibility and is therefore improved in impact resistance.

Examples of the low-molecular polyhydric alcohol used in the present invention include trimethylolethane, trimethylolpropane, 1,2,4-butanetriol, ditrimethylolpropane, pentaerythritol, dipentaerythritol and glycerin and mixtures of them.

Examples of the low-molecular weight polyhydric alcohol that is preferably used include trimethylolpropane, ditrimethylolpropane, pentaerythritol and adducts of these compounds and lactone compounds. Examples of the lactone compound include ε-caprolactone, γ-caproiactone, γ-valerolactone, δ-valerolactone andγ-butyrolactone. Among these compounds, ε-caprolactone, γ-valerolactone andγ-butyrolactone are preferable.

Examples of the above acid anhydride (2) include phthalic acid anhydride, tetrahydrophthalic acid anhydride, hexahydrophthalic acid anhydride, 4-methylhexahydrophthalic acid anhydride, trimellitic acid anhydride and succinic acid anhydride.

The half-esterifícation reaction of the above polyester polyol (1) and the acid anhydride (2) may be performed in the usual reaction condition of a temperature of ambient temperature to 150°C and normal pressure. It is unnecessary to modify all hydroxyl groups of the polyester polyol into carboxyl groups but a part of the hydroxyl groups may be left. According to the above methods, the distribution of molecular weight is made sharp, enabling further high-solidification, and it is therefore possible to form a coating film having excellent weather resistance and water resistance.

The carboxyl group-containing polyester resin (B) obtained by the above reaction has an acid value of 50 to 350 mg KOH/g (solid content), preferably 100 to 300 mg KOH/g (solid content) and more preferably 150 to 250 mg/KOH/g (solid content), a number average molecular weight of 400 to 3500, preferably 500 to 2500 and more preferably 700 to 2000, and the ratio of the weight average molecular weight/the number average molecular weight is 1.8 or less, preferably 1.5 or less and more preferably 1.35 or less.

When the acid value exceeds the upper limit, the viscosity of the resin may become too high, bringing about a reduction in the concentration of the nonvolatile content of the coating composition. When the acid value is less than the lower limit, the curability of the coating composition may be insufficient. Also, when the molecular weight exceeds the upper limit, the viscosity of the resin may become too high, bringing about a reduction in the nonvolatile content of the diluted coating composition made to have the coating viscosity by dilution. When the molecular weight is less than the lower limit, insufficient curability may be obtained. Moreover, when the ratio of the weight average molecular weight/the number average molecular weight exceeds the upper limit, water resistance and weather resistance of the coating film may deteriorate.

The above carboxyl group-containing polyester resin (B) has a hydroxyl group in its molecule and therefore a carboxyl group and a hydroxyl group are provided simultaneously, to improve adhesiveness in a recoating operation. In this case, the hydroxyl value of the carboxyl group-containing polyester resin is 150 or less(solid content), preferably 5 to 100 (solid content) and more preferably 10 to 80 (solid content). When the hydroxyl value exceeds the upper limit, the water resistance may be reduced.

The above carboxyl group-containing polyester resin (B) having a hydroxyl group and a carboxyl group reacts both the epoxy group-containing acryl resin (C) described below and the carboxyl group-containing acryl resin (A). Thus more strong firm coating film can be formed. Therefore, the carboxyl group-containing polyester resin (B) preferably has an average of 0.1 or more hydroxyl groups in one molecule.

In order to prepares the carboxyl group-containing polyester resin, a molar amount of an acid anhydride group of the acid anhydride (2) is set to be 0.2 to 1.0 times and particularly preferably 0.5 to 0.9 times based on the molar amount of a hydroxyl group of the polyester (1). When this ratio is less than the lower limit, the curability of the coating composition may deteriorate.

The above carboxyl group-containing polyester resin (B) component may be compounded in an amount of 5 to 70% by weight, preferably 5 to 50% by weight and more preferably 10 to 40% by weight based on the weight of all nonvolatile components in the coating composition. When the amount of the carboxyl group-containing polyester resin (B) is less than the lower limit, the concentration of the nonvolatile components of the coating composition may be reduced. When the amount of the carboxyl group-containing polyester resin (B) exceeds the upper limit, the weather resistance of the coating film may deteriorate.

The epoxy group-containing acryl resin (C) contained in the clear coating composition used in the present invention is an epoxy resin having two or more, preferably 2 to 10 and more preferably 3 to 8 epoxy groups in one molecule.

The above epoxy group-containing resin (C) is preferably an epoxy group-containing acryl resin obtained by copolymerizing 10 to 60% by weight and preferably 15 to 50% by weight of the epoxy group-containing ethylenic unsaturated monomer (1) with the 40 to 90% by weight and preferably 10 to 60% by weight of the ethylenic unsaturated monomer (2) having no epoxy group. When the amount of the epoxy group-containing ethylenic unsaturated monomer is less than the lower limit, the curability of the coating composition may be insufficient When the amount exceeds the upper limit, the coating film may be too hard and the weather resistance of the coating film may be therefore insufficient.

Examples of the above epoxy group-containing ethylenic unsaturated monomer (1) include glycidyl (meth)acrylate, β-methylglycidyl (meth)acrylate, 3,4-epoxycyclohexanyl (meth)acrylate. It is preferable to use glycidyl (meth)acrylate to ensure curability and storage stability which are well balanced.

As the ethylenic unsaturated monomer (2) having no epoxy group, those having no influence on an epoxy group among the above ethylenic unsaturated monomers having no acid anhydride may be likewise used.

As the ethylenic unsaturated monomer (2) having no epoxy group, hydroxyl group-containing ethylenic unsaturated monomers represented by the following formula (I) may also be used.

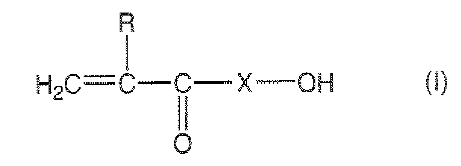

In the formula, R represents a hydrogen atom or a methyl group and X represents an organic chain represented by the following formula (II) or (III).

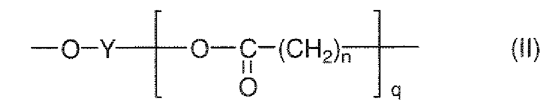

In the formula, Y represents a straight-chain or branched alkylene group having 2 to 8 carbon atoms, n denotes an integer from 3 to 7 and q denotes an integer from 0 to 4.

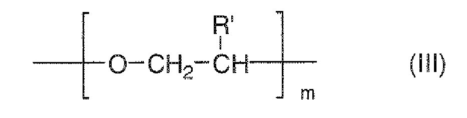

In the formula, R' represents a hydrogen atom or a methyl group and m denotes an integer from 2 to 50.

Specific examples of the hydroxyl group-containing ethylenic unsaturated monomer represented by the formula (I) include 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, and reaction products of these methacrylates with ε-caprolactone, and compounds obtained by esterifying a (meth)acrylic acid and outstandingly excess diol (for example, 1,4-butanediol, 1,6-hexanediol, polyethylene glycol and polypropylene glycol).

As the hydroxyl group-containing ethylenic unsaturated monomer used, monomers having 5 to 23 and particularly 5 to 13 carbon atoms are preferably used. This reason is that if the chain length of this monomer is too short, the flexibility in the vicinity of crosslinked points may disappear and therefore, the coating film may be too hard, whereas the chain length is too long, the molecular weight between crosslinked points may be too large.

When the above hydroxyl group-containing ethylenic unsaturated monomer is used, the adhesiveness and recoating characteristics of the obtained coating film are improved. Also, the epoxy group-containing acryl resin having a hydroxyl group and a carboxyl group, as described below, can react with the carboxyl group-containing acryl resin (A) at both functional groups, namely, the hydroxy group and the epoxy group where both compounds are bound, whereby more strong firm coating film can be obtained.

The hydroxyl value of the above epoxy group-containing acryl resin (C) is 5 to 300 (solid content), preferably 10 to 200 (solid content) and more preferably 15 to 150 (solid content). When the hydroxyl value exceeds the upper limit, the nonvolatile content of the coating film may be decreased and the water resistance of the coating film may be insufficient. When the hydroxyl value is less than the lower limit, deterioration in adhesiveness may be obtained.

The above epoxy group-containing acryl resin (C) may be obtained by copolymerizing 5 to 70% by weight of a hydroxyl group-containing ethylenic unsaturated monomer having the structure represented by the above formula (I) with 10 to 60% by weight of (1) an epoxy group-containing ethylenic unsaturated monomer and, according to the need, with 0 to 85% by weight of an ethylenic unsaturated monomer having neither hydroxyl group nor epoxy group. In this case, the obtained epoxy group-containing acryl resin (C) contains, in one molecule, an average of 2 to 12 and preferably 3 to 10 epoxy groups and an average of 0.5 to 10 and preferably 1 to 8 carbon atoms.

The number average molecular weight of the epoxy group-containing acryl resin (C) is preferably 500 to 10000, more preferably 1000 to 8000 and still more preferably 1500 to 5000. When the number average molecular weight is less than the lower limit, insufficient curability may be obtained. When the number average molecular weight exceeds the upper limit, the nonvolatile content of the diluted coating composition made to have the coating viscosity by dilution may be decreased. The epoxy equivalent of the epoxy group-containing acryl resin is preferably 50 to 700, more preferably 80 to 600 and still more preferably 100 to 500. When the epoxy equivalent exceeds the upper limit, the curability of the coating composition may be unsatisfactory. When the epoxy equivalent is less than the lower limit, the coating film may become too hard and therefore fragile. Therefore, an epoxy equivalent out of the above range is undesirable.

The above epoxy group-containing acryl resin (C) component may be compounded in an amount of 10 to 80% by weight, preferably 20 to 70% by weight and more preferably 30 to 65% by weight based on the weight of all solid content in the curable resin composition. When the amount of the epoxy group-acryl resin is less than the lower limit, the curability of the coating composition may be reduced. When the amount exceeds the upper limit, yellowing resistance may deteriorate.

The clear coating composition used in the present invention may be produced by blending a carboxyl group-containing acryl resin (A), a carboxyl group-containing polyester resin (B) and an epoxy group-containing acryl resin (C). In the case of using, particularly, a carboxyl group-containing acryl resin (A) having a carboxyl group and a carboxylate group and an epoxy group-containing acryl resin (C) having a hydroxyl group and an epoxy group, a clear coating composition forming a coating film superior in, especially, acid resistance is obtained.

In this case, the carboxyl group-containing acryl resin (A), the carboxyl group-containing polyester resin (B) and the epoxy group-containing acryl resin (C) are preferably blended such that the molar ratio of the carboxyl groups contained in the carboxyl group-containing acryl resin (A) and carboxyl group-containing polyester resin (B) to the epoxy groups contained in the epoxy group-containing acryl resin (C) is 1/1.4 to 1/0.6 and preferably 1/1.2 to 1/0.8, and the molar ratio of the carboxyl groups or carboxylate groups combined to the carbon adjacent to the carbon with which the carboxyl group is bound contained in the carboxyl group-containing acryl resin (A) to the hydroxyl groups contained the carboxyl group-containing polyester resin (B) and the epoxy group-containing acryl resin (C) is 1/2.0 to 1/0.5 and preferably 1/1.5 to 1/0.7.

When the molar ratio of the carboxyl groups contained in the carboxyl group-containing acryl resin (A) and carboxyl group-containing polyester resin (B) to the epoxy groups contained in the epoxy group-containing acryl resin (C) exceeds the upper limit, the curability of the obtained coating film may deteriorate. When the molar ratio is less than the lower limit, the coating film may be yellowed. When the molar ratio of the carboxyl groups or carboxylate groups combined to the carbon adjacent to the carbon with which the carboxyl group is bound contained in the carboxyl group-containing acryl resin (A) to the hydroxyl groups contained the carboxyl group-containing polyester resin (B) and the epoxy group-containing acryl resin (C) exceeds the upper limit, the curability of the obtained coating composition may deteriorate. When the molar ratio is less than the lower limit, hydroxyl groups are excessive and water resistance may deteriorate.

The mechanism of curing of the clear coating composition obtained in this manner is as follows. First, the carboxyl group and carboxylate group in the carboxyl group-containing acryl resin (A) are reacted with each other by heating to generate an acid anhydride group in the carboxyl group-containing acryl resin (A) and a free mono-alcohol is generated. The generated mono-alcohol is vaporized and removed out of the system. Then, the acid anhydride groups produced in the carboxyl group-containing acryl resin (A) react with the hydroxyl groups contained in the carboxyl group-containing polyester resin (B) and the epoxy group-containing acryl resin (C) to form crosslinking points to form carboxyl groups again. These carboxyl groups and the carboxyl groups contained in the carboxyl group-containing polyester resin (B) react with the epoxy groups existing in the epoxy group-containing acryl resin (C) to form crosslinking points. Three types of the polymers are reacted with each other in the above manner, allowing curing to proceed, to thereby form a coating film crosslinked at high density.

The clear coating composition used in the present invention may contain a curing catalyst which is usually used for an esterification reaction of the acid such as a quaternary ammonium salt with the epoxy. As the curing catalyst, benzyltriethylammonium chloride or bromide, tetrabutyl ammonium chloride or bromide, salicylate or glycolate and paratoluene sulfonate are exemplified.

The amount of the curing catalyst to be added is usually 0.01 to 3,0% by weight, preferably 0.1 to 1.5% by weight and more preferably 0.4 to 1.2% by weight based on the resin solid content. When the amount of the curing catalyst is less than the lower limit, the effect of the addition may not be obtained. When the amount of the curing catalyst exceeds the upper limit, the storage stability may deteriorate.

A known tin type compound as described in JP-A No. Hei 2(1990)-151651 may be blended in the clear coating composition, Examples of the tin type catalyst include dimethyltin bis(methylmaleate), dimethyltin bis(ethylmaleate), dimethyltin bis(butylmaleate) and dibutyltin bis(butylmaleate).

The amount of this tin type catalyst to be added is generally 0.05 to 6.0% by weight, preferably 0.1 to 4.0% by weight and more preferably 0.2 to 2.0% by weight based on the solid content of the coating composition. When the amount of the tin type catalyst is less than 0.05% by weight, the storage stability may be reduced. When the tin type catalyst is used in an amount exceeding 6.0% by weight, the weather resistance may deteriorate. When the curing catalyst is combined with the tin type catalyst, the ratio by weight of the curing catalyst to the tin type catalyst is preferably set to be 1/4 to 1/0.2.

A blocked isocyanate may be added to the clear coating composition used in the present invention to raise crosslinking density and to improve water resistance. A known ultraviolet absorber, photostabilizer, antioxidant and the like may also be added. A known rheology controller, other surface regulators and the like may be further added. A solvent such as an alcohol type solvent, aromatic hydrocarbon type solvent, ester type solvent or ketone type solvent may be used for the purpose of viscosity control.

Substrate
The method for forming a coating film in the present invention is advantageously used to form a coating film on various substrates, for example, metals, plastics and foaming bodies and particularly, on the surface of metals and cast products. This method is particularly preferably used for metal products that can be coated by cationic electrodeposition.

Examples of the above metal products include iron, copper, aluminum, tin and zinc and alloys containing these metals. Specific examples of these metal products include bodies and parts of automobiles such as cars, tracks, auto-bicycles and buses. These metals are preferably treated chemically with a phosphate or chromate in advance.

The substrate to be used in the method for forming a coating film in the present invention may be provided with an electrodeposition coating film formed on chemically treated steel plate. As the electrodeposition coating composition for forming the electrodeposition film, a cationic type and anionic type may be used. The cationic type electrodeposition coating composition is preferable because it provides a multi-layered coating film superior in corrosion resistance.

Method for forming a coating film
In the method for forming a coating film in the present invention, the intermediate coating film is formed using the intermediate coating composition, the base coating film is formed using the base coating composition and the clear coating film is formed using the clear coating composition in this order according to a wet-on-wet method and then these three coating films are baked and cured simultaneously.

When the intermediate coating composition is applied to coated products such as bodies of automobiles, a coating film may be formed by using multistage coating using air-electrostatic spray coating and preferably two-stage coating or by using a coating method in which air electrostatic spray coating is combined with a rotary atomizing system electrostatic coater that is generically called "µµ (micro-micro) bel, "µ(micro) bel" or "meta-bel". These coating methods make it possible to obtain a coating film superior in appearance.

According to the present invention, the film thicknesses of the dry coating films using the intermediate coating composition are usefully 10 to 60µm though it varies depending on a desired use. When the thickness exceeds the upper limit, the sharpness of the coating film may deteriorate and disorders such as mottling and sagging may be caused. When the thickness is less than the lower limit, the coating film maynot conceal the undercoat and breaking of the coating film may be caused.

In the method for forming a coating film in the present invention, the base coating composition and the clear coating composition are further applied to the uncured intermediate coating film in this order in a wet-on-wet manner, to thereby form a base coating film and a clear coating film.

The base coating composition in the present invention may be applied by air electrostatic spray coating or using a rotary atomizing system electrostatic coater such as meta-bel, µµ-bel or µ-bel in the same manner as the intermediate coating composition. The dry film thickness of the base coating film may be set to be 5 to 35µm and preferably 7 to 25µm. When the film thickness of the base coating film exceeds 35µm, the sharpness of the coating film may deteriorate and disorders such as mottling and sagging may be caused. When the thickness is less than 5µm, the coating film insufficiently conceal the undercoat and breaking (discontinuous parts of the coating film are present) of the coating film may be caused. The above both cases are not undesirable.

The base coating composition in this present invention contains a nonaqueous dispersion resin having a core-shell structure and crosslinking polymer microparticles. It has been found in the present invention that even if either one of the non aqueous dispersion resin and the crosslinking polymer microparticles is independently added to the coating composition, sufficient structural viscosity cannot be imparted to the coating composition. The use of a combination of the both surprisingly enables the development of larger structural viscosity.

The magnitude of the structural viscosity relates to the provision of a fineness of metallic color associated with micronization of the coating composition in a spraying device and color fluctuation caused by subtle striking the metallic base coating film into the clear coating film. For example, in the atomizing process in which large rate-shearing force (shearing force: 10 (1/sec) is applied to the coating, the coating exhibits lower viscosity as the structural viscosity is increased, with the result that the atomized particles of the coating solution are decreased in size and the fineness of the metallic color coating film is enhanced. In the area where the shearing rate is smaller (1/10 (1/sec) after the coating is applied, on the other hand, the coating exhibits higher viscosity as the structural viscosity is increased. This limits the fluctuation of a luster color pigment and also limits the miscibility between the metallic base coating film and the clear coating film when the clear coating composition is applied to the uncured metallic base coating film. Therefore, the metallic feel of the coating film is improved.

In the method for forming a coating film in the present invention, the clear coating film applied after the formation of the above base coating film is formed to smooth the irregularities caused by the above base coating film and a twinkled plane produced when a luster color pigment is contained thereby protecting the base coating film. As to a specific coating method, it is preferable to form the coating film by a rotary atomizing system electrostatic coater such as the aforementioned µµ-bel or µ-bel.

The base coating composition used to form the multi-layered coating film in the present invention contains the nonaqueous dispersion resin having a core-shell structure and the crosslinking polymer microparticles. Only insufficient structural viscosity is developed even if either one of the materials is independently added to a coating system. However, a larger structural viscosity is obtained resultantly when both the material are used together. The development of the structural viscosity leads to the effect of preventing color fluctuation caused by subtle striking the metallic base coating film into the clear coating film, and contributes to the ability to crush coating particles easily just after the coating film is formed in spray coating and improves the fineness of the luster color pigment in the resulting coating film and the smoothness of the coating film.

A dry film thickness of the clear coating film formed using the above clear coating composition is preferably about 10 to 80µm and more preferably about 20 to 60µm. When the film thickness exceeds the upper limit, disorders such as popping and sagging may be caused. When the film thickness is less than the lower limit, the irregularities on the undercoat maynot be concealed.

The three coating films thus obtained are cured by the so-called three-coat/one-bake method in which these three layers are baked and cured simultaneously. In this method, a baking drying furnace can be omitted, which is preferable from economical and environmental points of view.

The curing temperature at which the above multi-layered coating film is cured is set to 60 to 140°C and preferably 80 to 130°C, whereby a highly crosslinked cured coating film is obtained. When the curing temperature exceeds the upper limit, the coating film may be hard and fragile. When the curing temperature is less than the lower limit, insufficient curing may be obtained. Though the curing time differs depending on the curing temperature, it is about 10 to 30 minutes at 90 to 130°C, and about 5 to 15 minutes and preferably 7 to 10 minutes at 120°C to 150°C. In the method of the present invention, not only the baking temperature can be lowered but also the curing time which is usually 18 to 30 minutes at 140°C can be shortened to 5 to 15 minutes.

The film thickness of the multi-layered coating film formed in the present invention is 30 to 300µm in many cases and preferably 50 to 250µm. When the film thickness exceeds the upper limit, the film properties such as cooling/heating cycle properties may deteriorate. When the film thickness is less than the lower limit, the strength of the film itself may be decreased.

### Examples

The present invention will be explained in more detail by way of examples, which are not intended to be limiting of the present invention, in which the term of "parts" indicate parts by weight.

### Production Example 1: Production of a urethane-modified polyester resin for an intermediate coating composition

A two-liter reactor equipped with a nitrogen introduction tube, a stirrer, a temperature controller, a dropping funnel and a cooling tube provided with a decanter was charged with 440 parts of isophthalic acid, 20 parts of hexahydrophthalic acid, 40 parts of azelaic acid, 300 parts of trimethylolpropane and 200 parts of neopentyl glycol. When these raw material were dissolved by heating so that the mixture could be stirred, 0.2 parts of dibutyltin oxide was poured into the mixture to start stirring. The temperature of the reaction mixture was gradually raised from 180 to 220°C over 3 hours. The produced condensed water was distilled out of the system. When the temperature of the system reached 220°C, the mixture was kept at the temperature for one hour and 20 parts of xylene was gradually added to the reaction mixture to allow a condensation reaction to proceed in the presence of a solvent. When an acid value of the mixture reached 10 mg KOH/g, the mixture was cooled to 100°C and 100 parts of hexamethylene diisocyanate was gradually added to the mixture over 30 minutes. After the mixture was kept as it was for one hour, 200 parts of xylene and 200 parts of butyl acetate were added to the mixture to obtain a urethane-modified polyester resin having a solid content of 70%, a number average molecular weight of 2000, an acid value of 8 mg KOH/g, a hydroxyl value of 120 and a resin Tg of 60°C.

Production Example 2: Production of a nonaqueous dispersion
(2-1) Production of a dispersion stabilizing resin
A container equipped with a stirrer, a temperature controller and a reflux condenser was charged with 90 parts of butyl acetate. Next, 20 parts of a solution prepared by blending 38.9 parts of methylmethacrylate, 38.8 parts of stearylmethacrylate, 22.3 parts of 2-hydroxyethylacrylate and 5.0 parts of azobisisobutyronitrile was added and the mixture was heated with stirring to raise the temperature of the mixture. When the temperature of the mixture reached 110°C, the remainder 85 parts of the above mixed solution was added dropwise to the above mixture for 3 hours and a solution containing 0.5 parts of azobisisobutyronitrile and 10 parts of butyl acetate was added dropwise to the resulting mixture for 30 minutes. The reaction solution was further stirred under refluxing for 2 hours to raise the rate of conversion into a resin and then the reaction was terminated, to obtain an acryl resin having a solid content of 50%, a number average molecular weight of 5600 and a SP value of 9.5.

(2-2) Production of a nonaqueous dispersion
A container equipped with a stirrer, a cooler and a temperature controller was charged with 90 parts of butyl acetate and 120 parts (solid content: 60 parts) of the acryl resin obtained in the above "(2-1) Production of a dispersion stabilizing resin". Next, a solution having a composition containing 7.0 parts of styrene, 1.8 parts of methacrylic acid, 12.0 parts of methylmethacrylate, 8.5 parts of ethylacrylate, 40.7 parts of 2-hydroxyethylacrylate and 1.4 parts of azobisisobutyronitrile was added dropwise to the above mixture at 100°C for 3 hours. Then, a solution containing 0.1 parts of azobisisobutyronitrile and 1 part of butyl acetate was added to the above mixture for 30 minutes. When the reaction solution was stirred for further 1 hour, an emulsion having a solid content of 60% and a particle diameter of 180 nm was obtained. This emulsion was diluted with butyl acetate to obtain a dispersion of core-shell type butyl acetate containing 40% by weight of a nonaqueous dispersion having a viscosity of 300 cps (25°C) and a particle diameter of 180 nm. Tg and hydroxyl value of this nonaqueous dispersion resin were 23°C and 162 respectively.

Production Example 3: Production of an intermediate coating composition
A one-liter vessel was charged with 107 parts of the urethane-modified polyester resin vanish for an intermediate coating composition which was obtained in the above Production Example 1, 280 parts of titanic oxide (trade mark: CR-97, manufactured by ISHIHARA SANGYO KAISHA, Ltd.), 13 parts of a carbon black pigment (trade mark: MA-100, manufactured by Mitsubishi Chemical Co., Ltd.), 7 parts of scaly talc (trade mark: LMS-100, manufactured by Fuji Talc Industrial Co., Ltd.), 47 parts of butyl acetate and 47 parts of xylene. GB503 M (particle diameter: 1.6 mm, glass beads) was poured in the same amount as the charge weight into the mixture. The mixture was dispersed at ambient temperature by using a bench SG mill for 3 hours to make a gray pigment paste. The grain size measured by a grind gage was 50µm or less when the dispersion operation was finished. The glass beads were removed by filtration to obtain a pigment paste.

To 100 parts of the above paste, 130 parts of the above urethane-modified polyester resin for an intermediate coating composition, 53 parts of the nonaqueous dispersion for an intermediate coating composition obtained in the above Production Example, 71 parts of a melamine resin (trade name: U-VAN 128, manufactured by Mitsui Chemicals, Inc., solid content: 60%) and 71 parts of a methylene type blocked isocyanate (trade name: Duranate MF-K60X, manufactured by Mitsui Chemicals, Inc., solid content 60%) were added to prepare a coating composition.

This composition was diluted with a mixture solvent of ethoxyethyl propionate/aromatic hydrocarbon solvent (trade mark: S-100, manufactured by Exxon Corporation) = 1/1 by using a No. 4 Ford cup to 19 seconds/20°C. The nonvolatile component when the composition was applied was 49%.

Production Example 4: Production of an acryl resin (i)
A container equipped with a stirrer, a temperature controller and a reflux condenser was charged with 50 parts of xylene and 25 parts of n-butanol. 20 parts of a solution prepared by blending 5.0 parts of styrene, 1.5 parts of methacrylic acid, 20.0 parts of methyl methacrylate, 45.0 parts of ethyl acrylate, 6.6 parts of 2-hydroxy ethylacrylate, 5.0 parts of butoxy methylacryl amide, 17.6 parts of a hydroxyl group-containing monomer (trade name: Prakcei FM-2, manufactured by Daicel Chemical Industries, Ltd.) and 7.0 parts of azobisisobutyronitrile was added to the mixture, which was then heated with stirring to raise the temperature of the system. The remainder 87.7 parts of the above mixed solution was added dropwise to the above mixture under refluxing for 3 hours, and a solution containing 0.2 parts of azobisisobutyronitrile and 8 parts of xylene was added dropwise to the resulting mixture for 30 minutes.
The reaction solution was further stirred under refluxing for further 1 hour to raise the rate of conversion into a resin and then the reaction was terminated, to obtain an acryl resin varnish having a solid content of 55% and a number average molecular weight of 3800.

Production Example 5 Production of a crosslinking polymer microparticles (iii-1)
(5-1) Production of a polyester resin having an amphoteric ionic group
A two-liter flask equipped with a stirrer, a nitrogen introducing tube, a temperature controller, a condenser and a decanter was charged with 134 parts of bishydroxyethyltaurine, 130 parts of neopentyl glycol, 236 parts of azelaic acid, 186 parts of phthalic acid anhydride and 27 parts of xylene and the temperature of the mixture was raised. The water generated by the reaction was removed together with xylene as an azeotrope. The temperature of the mixture was raised to 190°C over 2 hours from the start of the refluxing. Stirring and dewatering were continued until the acid value of the mixture became 145 and then, the mixture was cooled to 140°C. Then, the mixture was kept at 140°C, and 314 parts of glycidyl versatate (trade name: Carjula E-10, manufactured by Shell Chemicals Japan Ltd.) was added dropwise to the mixture for 30 minutes. Then, the stirring was continued for 2 hours and then the reaction was stopped. The polyester resin had an acid value of 59, a hydroxyl value of 90 and a number average molecular weight of 1054.

(5-2) Production of a crosslinking polymer microparticles
A one-liter reactor equipped with a stirrer, a cooler and a temperature controller was charged with 232 parts of deionized water, 10 part of the polyester resin obtained in the above production of a polyester resin having an amphoteric group and 0.75 parts of dimethyl ethanol amine and the mixture was kept at 80°C with stirring to dissolve these components. A solution prepared by dissolving 4.5 parts of azobiscyanovaleric acid in 45 parts of deionized water and 4.3 parts of dimethylethanolamine was added to the solution. Then, a mixture solution containing 130 parts of methylmethacrylate, 40 parts of styrene and 140 parts of ethylene glycol dimethacrylate was added dropwise to the resulting solution over 60 minutes. After the dropwise addition was completed, a solution prepared by dissolving 1.5 parts of azobiscyanovaleric acid in 15 parts of deionized water and 1.4 parts of dimethylethanolamine was added to the solution, which was then stirred continuously at 80°C for 60 minutes to obtain an emulsion having a solid content of 45%, a pH 7.2, a viscosity of 92 cps (25°C) and a particle diameter of 0.1µm. This emulsion was substituted with a xylol solution by utilizing the azeotropic phenomenon to obtain a xylol dispersion containing 20% by weight of crosslinking polymer microparticles having a particle diameter of 0.07µm.

Example 1
Production of a base coating composition
The acryl resin (i) obtained in Production Example 4 (70 parts), 30 parts of a melamine resin (trade mark: U-VAN 20N60, manufactured by Mitsui Chemicals, Ltd.), 5 parts of the crosslinking polymer microparticles (iii-1) of Production Example 5, 5 parts of the nonaqueous dispersion resin (iii-2) having a core-shell structure and 15 parts of an aluminum pigment (trade name: Alumi-Paste 91-0562, manufactured by Toyo Aluminum K,K,) were weighed and taken in a stainless container and stirred using a table stirrer to prepare a metallic base coating composition.

Formation of a multi-layered coating film
A cationic electrodeposition coating (trade mark: V-50, manufactured by Nippon Paint Co., Ltd.) was electrodeposited on a 0.8-mm-thick dull stainless plate which had been subjected to zinc phosphate chemical treatment such that a thickness of a cured electrocoating film was about 20µm and was heated at 160°C for 30 minutes to cure the film. Then, the intermediate coating composition obtained in Production Example 3 was applied by air spraying such that a thickness of a cured intermediate coating film was about 25µm.

The above coated plate to which the uncured intermediate composition was applied was stood vertically in 10 minutes after the intermediate coating composition was applied. The prepared base coating composition was diluted with a diluent thinner constituted of 50 parts of a hydrocarbon type solvent (trade name: Solvesso 150, manufactured by Exxon Corporation), 25 parts of ethyl acetate and 25 parts of toluene to 12.5 seconds/20°C using No. 4 Ford cup. The obtained diluted base coating composition was applied to the plate in two stages at an interval of 1.5 minutes such that the dry film thickness was 15µm using an electrostatic rotary atomizing finishing equipment(trade name:
Metabel, manufactured by Ransburg Industrial Finishing K.K.). The resulting coated plate was allowed to stand at ambient temperature for 10 minutes to make a metallic base coating film.

Then, a clear coating composition (trade name: Macflow O-380, manufactured by Nippon paint Co., Ltd.) that was diluted in advance to 25 seconds/20°C by using a No. 4 Ford cup was applied by one coating operation to the plate which was disposed vertically and coated with the uncured intermediate coating film and base coating film in a wet-on-wet manner such that the dry film thickness was 35µm.

The coated plate formed with the uncured three coating films was allowed to stand in a vertical state at ambient temperature for 7 minutes. Then, these three coating films put in a vertical state were baked in a 140°C dryer for 30 minutes to obtain a multi-layered coating film produced in the three-coat/one-bake system. The obtained multi-layered coating film was subjected to the following tests.

<Method of evaluation of thixotropy>
The prepared base coating composition was diluted to 19 seconds/20°C by using a Ford cup No. 4. This diluted solution was subjected to a B-type viscometer (Model BM) manufactured by Tokyo keiki corp., to measure viscosities η₆ and η₆₀ at 20°C when the cone rotations were 6 rpm and 60 rpm respectively. The ratio of the both, namely, the value of η₆/η₆₀ was defined as a thixotropy index. The results are shown in Table 1.

<Evaluation of flip-flop (FF) property>
The coated plate was stood vertically and the resulting multi-layered coating film was subjected to a multi-angle color-difference meter (trade name:
Multi-Angle Spectrophotometer MA68II, manufactured by X-Rite, Incorporated) to measure the F value to rate the flip-flop property. The larger the F value is, the better the appearance is.

<Evaluation of color fluctuation characteristics>
Using a metallic base monolayer coating film as a standard, a color difference (ΔE) between the monolayer coating film and the multi-layered coating film obtained in the three-coat/one-bake system was measured and the value of the color difference was rated as the color fluctuation characteristics. As the value of the color difference decreases, the occurrence of the color fluctuation is decreased, showing that this sample is superior in color fluctuation characteristics.

<Evaluation of the appearance of the coating film>
The finish of the appearance of the multi-layered coating film was evaluated by visual inspection. The evaluation standard is as follows.
5: There is no grain feel of a pigment and also no mottling.
4: Although there is no grain feel of a pigment, there is a slight mottling.
3: There is a grain feel of a pigment and also a somewhat mottling.
2: There is a grain feel of a pigment and also an mottling.
1: There is a grain feel of a pigment and also the mottling observed.

Comparative Example 1
A base coating composition was prepared in the same manner as in Example 1 except that the amount of the crosslinking polymer microparticles (iii-1) to be compounded in Production Example 5 was altered to 10 parts and the amount of the nonaqueous dispersion resin (iii-2) having a core-shell structure and compounded in Production Example 2 was altered to 0 parts, and applied and evaluated in the same manner as in Example 1. The amount to be compounded and the results of evaluation are shown in Table 1.

Comparative Example 2
A base coating composition was prepared in the same manner as in Example 1 except that the amount of the crosslinking polymer microparticles (iii-1) to be compounded in Production Example 5 was altered to 8 parts and the amount of the nonaqueous dispersion resin (iii-2) having a core-shell structure and compounded in Production Example 2 was altered to 2 parts, and applied and evaluated in the same manner as in Example 1. The amount to be compounded and the results of evaluation are shown in Table 1.

Comparative Example 3
A base coating composition was prepared in the same manner as in Example 1 except that the amount of the crosslinking polymer microparticles (iii-1) to be compounded in Production Example 5 was altered to 2 parts and the amount of the nonaqueous dispersion resin (iii-2) having a core-shell structure and compounded in Production Example 2 was altered to 8 parts, and applied and evaluated in the same manner as in Example 1. The amount to be compounded and the results of evaluation are shown in Table 1.

Comparative Example 4
A base coating composition was prepared in the same manner as in Example 1 except that the amount of the crosslinking polymer microparticles (iii-1) to be compounded in Production Example 5 was altered to 0 parts and the amount of the nonaqueous dispersion resin (iii-2) having a core-shell structure and compounded in Production Example 2 was altered to 10 parts, and applied and evaluated in the same manner as in Example 1. The amount to be compounded and the results of evaluation are shown in Table 1.

**[Table 1]**

| | Example 1 | Comparative Example 1 | Comparative Example 2 | Comparative Example 3 | Comparative Example 4 |
|---|---|---|---|---|---|
| Acryl resin (i) | 70 | 70 | 70 | 70 | 70 |
| Melamine resin (ii) | 30 | 30 | 30 | 30 | 30 |
| Crosslinking polymer microparticles (iii-1) | 5 | 10 | 8 | 2 | - |
| Nonaqueous dispersion (iii-2) having a core-shell structure | 5 | - | 2 | 8 | 10 |
| Thixotropy index | 1.7 | 1.2 | 1.4 | 1.4 | 1.3 |
| FF property | 13.2 | 12.8 | 12.9 | 12.8 | 12.8 |
| Color fluctuation characteristics | 0.4 | 1.2 | 0.9 | 1.0 | 0.9 |
| Appearance of the coating film | 5 | 2 | 2-3 | 2-3 | 2 |

Shown in the above Examples and Comparative Examples, the base coating compositions used in the method of the present invention had a high thixotropy index and the coating films formed by the method of the present invention were superior in all of the FF property, color fluctuation characteristics and the appearance of the coating film. On the other hand, the base coating compositions obtained in Comparative Examples all had a low thixotropy index and also the obtained coating films were all inferior in FF property, color fluctuation characteristics and the appearance of the coating film,

The present invention enables the formation of a multi-layered coating film free from all of the disorders including the occurrence of color fluctuation, a reduction in the appearance of the coating film, particularly, a reduction in the appearance of the vertical plane of a coating film or a reduction in a properties of a coating film which are caused by miscibility between a metallic base coating film and a clear coating film. The method of the present invention is a method for forming a multi-layered coating film in a three-coat/one-bake system which is economically superior and is reduced in environmental load. As mentioned above, the method of the present invention is an industrially excellent method and enables the formation of the multi-layered coating film superior in the appearance of the coating film.

## Claims

1. A method for forming a multi-layered coating film, which comprises a step of successively coating, on an elecrocoating film formed on a substrate, an intermediate coating composition, a base coating composition and a clear coating composition formed thereon, and a step of baking and curing the coated three-layers at the same time, wherein
the intermediate coating composition comprises:
40 to 56% by weight of a urethane-modified polyester resin (a) having a number average molecular weight (Mn) of 1500 to 3000, obtained by reacting an aliphatic diisocyanate compound with a hydroxyl group-containing polyester resin having a glass transition temperature (Tg) of 40 to 80 °C, the polyester being obtained by polycondensation of an acid component containing 80 mol% or more of isophthalic acid with a polyhydric alcohol;
10 to 30% by weight of a melamine resin (b);
15 to 30% by weight of a blocked isocyanate compound (c) obtained by a blocking reaction of a compound having an active methylene group with hexamethylene diisocyanate or an isocyanate compound obtained by reacting hexamethylene diisocyanate with a compound reacted with the hexamethylene diisocyanate, and;
4 to 15% by weight of a nonaqueous dispersion resin (d) having a core-shell structure;
provided that amounts of (a) to (d) are on the bases of a resin solid content; and
0.4 to 2 parts by weight of a flat pigment (e) having a long diameter of 1 to 10µm and a number average particle diameter of 2 to 6µm, which the parts by weight of the flat pigment (e) is based on 100 parts by weight of the resin solid content; and wherein
the base coating composition is a solvent type base coating composition comprising:
10 to 90% by weight of an acryl resin (i) having a number average molecular weight (Mn) of 1000 to 20000, a hydroxyl value of 10 to 200 and an acid value of 1 to 80 mg KOH/g;
5 to 60% by weight of a melamine resin (ii);
1 to 30% by weight of polymer microparticles (iii);
provided that amounts of (i) to (iii) are on the bases of a resin solid content; and
1 to 23.0% of pigment weight concentration (PWC) of a luster color pigment (iv) based on a solid content of the base coating composition, wherein the polymer microparticles (iii) comprise crosslinking polymer microparticles (iii-1) having an average particle diameter (D₅₀) of 0.01 to 1µm and a nonaqueous dispersion resin (iii-2) having an average particle diameter (D₅₀) of 0.05 to 10µm and a core-shell structure, and a ratio of solid contents of both the components (iii-1) and (iii-2) is within a range of 40/60 to 60/40; and wherein
the clear coating composition comprises a carboxyl group-containing acryl resin (A), a carboxyl group-containing polyester resin (B) and an epoxy group-containing acryl resin (C).

2. A coated product having a multi-layered coating film obtained by the method for forming a multi-layered coating film of Claim 1.
